# EUROPEAN PATENT SPECIFICATION

(11) **EP 4 421 806 B1**
(45) Date of publication and mention of the grant of the patent: **29.10.2025**
(21) Application number: 21965134.6
(22) Date of filing: 25.11.2021
(51) Int. Cl.: G10L 25/87, G10L 15/04, G10L 15/18, G10L 25/21, G10L 25/30, G10L 25/78

(54) **SPEECH RECOGNITION**
SPRACHERKENNUNG
RECONNAISSANCE VOCALE

(43) Date of publication of application: 28.08.2024
(73) Proprietor: Shenzhen Yinwang Intelligent Technologies Co., Ltd., Shenzhen, Guangdong 518129 (CN)
(72) Inventor: GAO, Yi, Shenzhen, Guangdong 518129 (CN); NIE, Weiran, Shenzhen, Guangdong 518129 (CN)
(74) Representative: Pfenning, Meinig & Partner mbB
(86) International application number: PCT/CN2021/133207
(87) International publication number: WO 2023/092399

(56) References cited:
- CN-A- 102 314 884
- CN-A- 106 847 270
- CN-A- 106 847 270
- CN-A- 108 257 616
- CN-A- 108 257 616
- CN-A- 110 047 470
- CN-A- 111 583 923
- CN-A- 111 583 923
- CN-A- 112 567 457
- CN-A- 113 192 502
- CN-A- 113 345 473
- US-A1- 2016 358 598
- US-B1- 11 056 098
- US-B1- 9 437 186

## Description

### TECHNICAL FIELD

Embodiments of this application relate to the artificial intelligence field, and more specifically, to a speech recognition method, a speech recognition apparatus, and a computer-readable storage medium.

### BACKGROUND

Currently, voice interaction products, for example, intelligent terminal devices, smart household devices, and intelligent vehicle-mounted devices, are widely used in daily lives of people. In mainstream voice interaction products, voice interaction is actively initiated by a user, but a speech ending state (that is, a speech ending point of one round of dialog) is usually automatically determined through automatic speech recognition. At present, there are two main problems in speech ending state detection: a delayed speech ending state caused by background noise and a premature speech ending state caused by a pause in speech.

Therefore, how to determine a speech ending state more accurately is a technical problem that needs to be urgently resolved.
CN111583923A discloses an information control method and device and a storage medium. The method is applied to voice equipment and comprises the following steps: acquiring first voice to obtain voice data; inputting the voice data into a semantic classification model, and obtaining a judgment result whether the first voice is input or not based on semantic analysis; and when it is determined that the judgment result is that the first voice does not stop being input, continuing to collect a second voice.
CN106847270A discloses a double-threshold limited place name speech endpoint detection method. Starting from a first frame signal, the energy of each frame voice signal and the minimum energy threshold value and the maximum energy threshold value are judged, and The zero crossing rate and the zero crossing rate threshold are determined to determine how the next frame signal is detected; in the case of possible access to voice status, by increasing the variable, the voice signals that appear in the speech section before the light time are reserved.
US9437186B1 discloses a system that provides early results and/or incorporates semantic tagging. Early ASR results of an incoming utterance may be prepared based at least in part on an estimated endpoint and processed by a natural language understanding (NLU) process while final results, based at least in part on a final endpoint, are determined. If the early results match the final results, the early NLU results are already prepared for early execution. The endpoint may also be determined based at least in part on the content of the utterance, as represented by semantic tagging output from ASR processing. If the tagging indicate completion of a logical statement, an endpoint may be declared, or a threshold for silent frames prior to declaring an endpoint may be adjusted. CN113192502A discloses an audio processing method and device and a storage medium. The method is applied to a cloud server, and comprises the following steps: receiving first audio data sent by terminal equipment; performing voice recognition on the first audio data; under the condition that the first voice recognition result is obtained, performing semantic analysis on the first voice recognition result to obtain a semantic analysis result; and based on the semantic analysis result, determining whether to send a stop judgment instruction to the terminal equipment, wherein the stop judgment instruction is used for indicating the terminal equipment to stop sending the audio data.
CN108257616A discloses a man-machine conversation detection method and a terminal. The man-machine conversation detection method comprises the steps of: detecting a sound in an environment, determining whether the sound is spoken voice content, regarding the spoken voice content as input and identifying spoken text content corresponding to the spoken voice content if the sound is determined to bethe spoken voice content, determining whether spoken semantic content is complete according to the spoken text content during the man-machine conversation process, and ending voice activity detectionwhen determining that the spoken semantic content is complete semantic content, otherwise, adjusting end time of the voice activity detection when determining that the spoken semantic content is incomplete semantic content, continuing to wait for a sound signal flow generated in the man-machine conversation process and regarding the sound signal flow as new spoken voice content input.

### SUMMARY

Embodiments of this application provide a speech recognition method, a speech recognition apparatus, and a system, thereby determining a speech ending state more accurately, so that a speech-based subsequent operation is responded to more accurately.

The invention is defined in the appended set of claims. According to a first aspect, a speech recognition method is provided in claim 1.

In the technical solution of this application, the speech ending point of the audio data is obtained by extracting and combining the sound category and the semantics in the audio data, so that the speech ending point of the audio data can be determined more accurately, thereby responding to a speech-based subsequent operation more accurately, and improving user experience. In addition, when the solution in this embodiment of this application is used to perform speech recognition, a waiting time before a speech ending point is not fixed, but changes with an actual speech recognition process. Compared with an existing manner in which a fixed waiting time is preset and a response is made after the waiting time ends, in this solution, a speech ending point can be obtained more accurately, thereby improving timeliness and accuracy of a response to a voice instruction of a user, and reducing waiting duration of the user.

For example, the sound categories of the plurality of audio frames may include a sound category of each of the plurality of audio frames. Alternatively, the sound categories of the plurality of audio frames may include sound categories of some of the plurality of audio frames.

It should be understood that a sound category may be extracted from each audio frame, but semantics may not be extracted from each audio frame. Specifically, an audio frame that includes no human voice has no semantics. Therefore, no semantics can be extracted from an audio frame that includes no speech. In this case, semantics of an audio frame that includes no speech may be considered as empty or null.

With reference to the first aspect, in some implementations of the first aspect, the method further includes: after obtaining the speech ending point, responding to an instruction corresponding to audio data that is prior to the speech ending point in the audio data.

After the speech ending point is obtained, the instruction may be immediately responded to, or the instruction may be responded to after a period of time. In other words, an operation corresponding to the audio data that is prior to the speech ending point in the audio data may be performed immediately after the speech ending point is obtained; or an operation corresponding to the audio data that is prior to the speech ending point in the audio data may be performed after a period of time after the speech ending point is obtained. The period of time may be a redundant time, an error time, or the like. According to the solution in this application, the speech ending point of the audio data can be determined more accurately, so that the instruction corresponding to the audio data that is prior to the speech ending point can be responded to more accurately. This helps improve timeliness and accuracy of a response to a voice instruction of a user, reduce waiting duration of the user, and improve user experience.

With reference to the first aspect, in some implementations of the first aspect, the sound categories of the plurality of audio frames may be obtained based on relationships between energy of the plurality of audio frames and preset energy thresholds.

With reference to the first aspect, in some implementations of the first aspect, the sound categories include "speech", "neutral", and "silence", the preset energy thresholds include a first energy threshold and a second energy threshold, and the first energy threshold is greater than the second energy threshold. A sound category of an audio frame whose energy is greater than or equal to the first energy threshold in the plurality of audio frames may be determined as "speech"; a sound category of an audio frame whose energy is less than the first energy threshold and greater than the second energy threshold in the plurality of audio frames is determined as "neutral"; or a sound category of an audio frame whose energy is less than or equal to the second energy threshold in the plurality of audio frames is determined as "silence".

With reference to the first aspect, in some implementations of the first aspect, the first energy threshold and the second energy threshold may be determined based on energy of background sound of the audio data. In different background environments, silence energy curves are different. For example, in a comparatively quiet environment, silence energy (that is, energy of background sound) is comparatively low, whereas in a comparatively noisy environment, silence energy (that is, energy of background sound) is comparatively high. Therefore, obtaining the first energy threshold and the second energy threshold based on the silence energy can adapt to requirements in different environments.

With reference to the first aspect, the plurality of audio frames include a first audio frame and a second audio frame, the first audio frame is an audio frame bearing the semantics, and the second audio frame is an audio frame subsequent to the first audio frame in the plurality of audio frames; and the obtaining a speech ending point of the audio data based on the sound categories and the semantics includes: obtaining the speech ending point based on the semantics and a sound category of the second audio frame.

The first audio frame is a plurality of audio frames bearing the semantics. The second audio frame is one or more audio frames subsequent to the first audio frame.

It should be noted that the "plurality of audio frames bearing the semantics" and the "plurality of audio frames" included in the audio data are different concepts. A quantity of the audio frames included in the first audio frame is less than a quantity of the audio frames included in the audio data.

With reference to the first aspect, the semantics and the sound category of the second audio frame are integrated to obtain an integrated feature of the plurality of audio frames, and then the speech ending point is obtained based on the integrated feature. Processing by using the integrated feature can improve processing efficiency, and can also improve accuracy.

With reference to the first aspect, in some implementations of the first aspect, speech endpoint categories include "speaking", "thinking", and "ending"; and a speech endpoint category of the audio data may be determined based on the semantics and the sound category of the second audio frame, and the speech ending point is obtained when the speech endpoint category of the audio data is "ending".

Further, when the integrated feature of the plurality of audio frames is obtained, the speech endpoint category of the audio data may be determined based on the integrated feature of the plurality of audio frames.

With reference to the first aspect, in some implementations of the first aspect, the semantics and the second audio frame may be processed by using a speech endpoint classification model, to obtain the speech endpoint category, where the speech endpoint classification model is obtained by using a speech sample and an endpoint category label of the speech sample, a format of the speech sample corresponds to a format of the semantics and the second audio frame, and an endpoint category included in the endpoint category label corresponds to the speech endpoint category.

Further, when the integrated feature of the plurality of audio frames is obtained, the integrated feature may be processed by using the speech endpoint classification model, to obtain the speech endpoint category. The speech endpoint classification model is obtained by using the speech sample and the endpoint category label of the speech sample, the format of the speech sample corresponds to a format of the integrated feature, and the endpoint category included in the endpoint category label corresponds to the speech endpoint category.

According to a second aspect, a speech recognition apparatus is provided in claim 7.

According to a third aspect, a computer-readable medium is provided in claim 13.

An electronic device may specifically include one or more of apparatuses such as a computer, a smartphone, a tablet computer, a personal digital assistant (personal digital assistant, PDA), a wearable device, a smart speaker, a television, an unmanned aerial vehicle, a vehicle, an in-vehicle chip, a vehicle-mounted apparatus (for example, in-vehicle infotainment or a vehicle-mounted computer), and a robot.

In this application, the speech ending point of the audio data is obtained by extracting and combining the sound category and the semantics in the audio data, so that the speech ending point of the audio data can be determined more accurately, thereby responding to a speech-based subsequent operation more accurately, and improving user experience. Specifically, according to the solutions in this application, an excessively long response delay caused by delayed speech ending point detection can be avoided, so that the speech ending point is obtained more quickly, so as to make a subsequent response in a timely manner, thereby reducing a waiting time of the user, and improving user experience. In addition, according to the solutions in this application, an accurate speech ending point can be obtained, so that a voice instruction of the user is not prematurely cut off due to premature speech ending point detection, and audio data with complete semantics is obtained, thereby helping accurately identify a user intention, so as to make an accurate response, and improve user experience. The energy thresholds are obtained based on the energy of the background sound, so as to adapt to requirements in different environments, thereby further improving accuracy of determining the speech ending point. The sound category and the semantics are first integrated, and then the speech ending point is obtained based on the integrated feature, so that processing efficiency can be improved, and accuracy of determining the speech ending point can also be further improved.

### BRIEF DESCRIPTION OF DRAWINGS

FIG. 1 is a schematic diagram of a structure of a speech recognition apparatus according to an embodiment of this application;
FIG. 2 is a schematic diagram of classification into sound categories according to an embodiment of this application;
FIG. 3 is a schematic diagram of processing an integrated feature by a speech endpoint classification model according to an embodiment of this application;
FIG. 4 is a schematic flowchart of a speech recognition method according to an embodiment of this application;
FIG. 5 is a schematic flowchart of a speech recognition method according to an embodiment of this application;
FIG. 6 is a schematic flowchart of a speech endpoint classification model training method according to an embodiment of this application;
FIG. 7 is a schematic diagram of a dictionary tree according to an embodiment of this application;
FIG. 8 is a schematic block diagram of a speech recognition apparatus according to an embodiment of this application; and
FIG. 9 is a schematic diagram of a hardware structure of a speech recognition apparatus according to an embodiment of this application.

### DESCRIPTION OF EMBODIMENTS

The following describes technical solutions in embodiments of this application with reference to accompanying drawings.

The solutions in this application may be applied to various voice interaction scenarios. For example, the solutions in this application may be applied to a voice interaction scenario of an electronic device and a voice interaction scenario of an electronic system. The electronic device may specifically include one or more of apparatuses such as a computer, a smartphone, a tablet computer, a personal digital assistant (personal digital assistant, PDA), a wearable device, a smart speaker, a television, an unmanned aerial vehicle, a vehicle, an in-vehicle chip, a vehicle-mounted apparatus (for example, in-vehicle infotainment or a vehicle-mounted computer), and a robot. The electronic system may include a cloud service device and a terminal device. For example, the electronic system may be an in-vehicle system or a smart home system. A terminal side device of the in-vehicle system may include any one of apparatuses such as a vehicle, an in-vehicle chip, and a vehicle-mounted apparatus (for example, in-vehicle infotainment or a vehicle-mounted computer). The cloud service device includes a physical server and a virtual server. The server receives data uploaded by a terminal side (for example, in-vehicle infotainment), processes the data, and then sends processed data to the terminal side.

The following briefly describes two comparatively common application scenarios.

### Application scenario 1: Voice interaction of a smartphone

In a smartphone, voice interaction may be implemented by using a voice assistant. For example, the smartphone may be operated through voice interaction with the voice assistant, or a user may converse with the voice assistant. Specifically, the voice assistant may obtain audio data by using a microphone, then determine a speech ending point of the audio data by using a processing unit, and trigger a subsequent response after obtaining the speech ending point of the audio data. For example, the voice assistant reports a user intention in the audio data to an operating system for response.

Through voice interaction, functions such as making a call, sending information, obtaining a route, playing music, and obtaining a conversational answer can be implemented, which greatly improves a technological feel of the smartphone and interaction convenience.

According to the solutions in this application, a speech ending point of audio data can be accurately identified, thereby improving accuracy and timeliness of a subsequent response, and improving user experience.

### Application scenario 2: Voice interaction of an in-vehicle system

In an in-vehicle system, a vehicle can be controlled through voice interaction. Specifically, in the in-vehicle system, audio data may be obtained by using a microphone, then a speech ending point of the audio data is determined by using a processing unit, and a subsequent response is triggered after the speech ending point of the audio data is obtained. For example, a user intention in the audio data is reported to the in-vehicle system for response.

Through voice interaction, functions such as obtaining a route, playing music, and controlling hardware (for example, a window or an air conditioner) that is in the vehicle can be implemented, thereby improving interaction experience of the in-vehicle system.

According to the solutions in this application, a speech ending point of audio data can be accurately identified, thereby improving accuracy and timeliness of a subsequent response, and improving user experience.

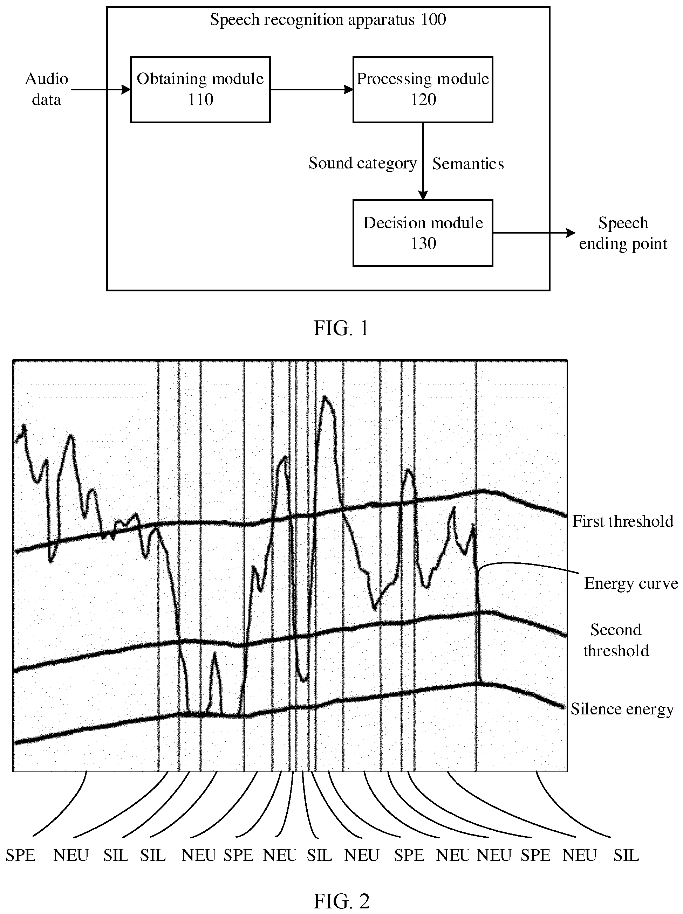

FIG. 1 is a schematic diagram of a structure of a speech recognition apparatus according to an embodiment of this application. As shown in FIG. 1, the speech recognition apparatus 100 is configured to process audio data to obtain a speech ending point of the audio data, that is, obtain a stop point of speech in the audio data. For example, input audio data includes a segment of speech: "I want to make a call". In this case, a speech ending point of the segment of audio data may be obtained through processing of the speech recognition apparatus 100, where the speech ending point may be the last audio frame corresponding to the last word in the segment of speech, that is, the speech ending point of the segment of audio data is the last audio frame corresponding to the word "call".

It should be noted that an ending point of audio data and a speech ending point of audio data are different concepts. An ending point of audio data means termination of audio. For example, an ending point of a segment of audio data that is 5 seconds long is the last audio frame of the segment of audio. A speech ending point of audio data is a stop point of speech in the segment of audio data. The audio data that is 5 seconds long is used as an example again. It is assumed that audio of the first 4 seconds includes speech, and there is no speech in the fifth second. In this case, a speech ending point of the audio data is an audio frame corresponding to an end of the fourth second. It is assumed that the audio data that is 5 seconds long includes no speech, and a preset time interval for speech recognition is 3 seconds. In this case, if no speech is recognized in 3 consecutive seconds, speech recognition is terminated, and a speech ending point of the 5-second audio data is an audio frame corresponding to an end of the third second.

The audio data may include a plurality of audio frames. It should be understood that the input audio data may include speech, or may include no speech. For example, it is assumed that a person wakes up a speech capture function, but does not speak in several seconds. In this case, captured audio data is audio data that includes no speech.

The plurality of audio frames in the audio data may be consecutive audio frames, or may be inconsecutive audio frames.

The speech recognition apparatus 100 includes an obtaining module 110, a processing module 120, and a decision module 130. Alternatively, the decision module 130 may be integrated into the processing module 120.

The obtaining module 110 is configured to obtain audio data, where the audio data may include a plurality of audio frames. The obtaining module 110 may include a speech capture device configured to obtain speech audio in real time, such as a microphone. Alternatively, the obtaining module 110 may include a communications interface. A transceiver apparatus such as a transceiver may be used for the communications interface, to implement communication with another device or a communications network, so as to obtain audio data from the another device or the communications network.

The processing module 120 is configured to process the plurality of audio frames in the audio data to obtain sound categories of the plurality of audio frames and semantics. This may be understood as follows: The processing module 120 is configured to extract the sound categories of the plurality of audio frames in the audio data and the semantics.

The semantics is used to represent a language included in the audio data, and may also be referred to as a text meaning, a meaning of words, a language meaning, or the like. Alternatively, the semantics may be borne by an audio stream.

For example, the sound categories of the plurality of audio frames may include a sound category of each of the plurality of audio frames.

Alternatively, the sound categories of the plurality of audio frames may include sound categories of some of the plurality of audio frames.

In other words, the processing module 120 may extract sound categories of all of the plurality of audio frames, or may extract sound categories of only some of the plurality of audio frames.

Optionally, the audio stream bearing the semantics may be obtained by using an apparatus such as an automatic speech recognition (auto speech recognition, ASR) apparatus. Each segment of the audio stream may be represented by a corresponding text. Each segment of the audio stream may include one or more audio frames.

The sound categories may include "speech (speech, SPE)", "neutral (neutral, NEU)", and "silence (silence, SIL)". "Speech" is a part that is in audio and that is affirmably human speaking (or may be understood as a human voice part in the audio), "neutral" is a comparatively fuzzy part that is in audio and that cannot be definitely determined as speech sound (or may be understood as a fuzzy part in the audio), and "silence" is a part that is in audio and that definitely includes no human voice (or may be understood as a part without human voice in the audio). It should be understood that, in this embodiment of this application, "silence" may mean that there is no speech sound, there is no sound, there is only background sound, or the like, rather than meaning that a decibel value is 0 in physical sense or there is no sound at all.

It should be understood that there may be another classification manner of sound categories. For example, the sound categories may include only "speech" and "silence", or may include "silence" and "non-silence", or may include "speech" and "non-speech". "Speech" and "non-speech" may also be referred to as "human voice" and "non human voice", respectively. The foregoing "speech", "neutral", and "silence" may also be referred to as "human voice", "possibly human voice", and "not human voice", respectively. It should be understood that this is merely an example, and a classification manner of sound categories is not limited in this embodiment of this application.

It should be noted that the sound categories are equivalent to determining and classifying the audio data from an acoustic perspective, and are used to distinguish between audio frame categories. The semantics is obtained by extracting a language component from the audio data, and is used to infer, from a language perspective, whether speaking is completed. It should be understood that a sound category may be extracted from each audio frame. However, because an audio frame including no human voice has no semantics, semantics of an audio frame including no speech may be considered as empty or null.

Generally, audio frames of different sound categories have different energy. For example, energy of a "speech" audio frame is comparatively high, energy of a "silence" audio frame is comparatively low, and energy of a "neutral" audio frame is lower than that of "speech" and higher than that of "silence".

Energy of an audio frame may also be referred to as intensity of an audio frame.

Optionally, the audio frames may be classified based on energy of the audio frames, so as to obtain the sound categories of the audio frames. Specifically, based on energy of an audio frame in the audio data, a sound category of the corresponding audio frame is obtained.

In an implementation, a sound category of a corresponding audio frame may be obtained based on a relationship between energy of the audio frame and a preset energy threshold. For example, preset energy thresholds may include a first energy threshold and a second energy threshold, and the first energy threshold is greater than the second energy threshold. An audio frame whose energy is greater than or equal to the first energy threshold is determined as "speech". An audio frame whose energy is less than the first energy threshold and greater than the second energy threshold is determined as "neutral". An audio frame whose energy is less than or equal to the second energy threshold is determined as "silence". In other words, a sound category of an audio frame whose energy is greater than or equal to the first energy threshold in the plurality of audio frames is determined as "speech", a sound category of an audio frame whose energy is less than the first energy threshold and greater than the second energy threshold in the plurality of audio frames is determined as "neutral", and a sound category of an audio frame whose energy is less than or equal to the second energy threshold in the plurality of audio frames is determined as "silence". However, it should be understood that, alternatively, audio whose energy is equal to the first energy threshold or equal to the second energy threshold may be determined as "neutral". The foregoing description is used as an example in this embodiment of this application.

FIG. 2 is a schematic diagram of classification into sound categories according to an embodiment of this application. As shown in FIG. 2, a horizontal coordinate represents an audio frame sequence, and a vertical coordinate represents an energy value corresponding to an audio frame sequence. An energy curve represents an energy change curve of the plurality of audio frames in the audio data. A first energy threshold curve represents a lower energy limit value curve of "speech" and an upper energy limit value curve of "neutral". A second energy threshold curve represents a lower energy limit value curve of "neutral" and an upper energy limit value curve of "silence". A silence energy curve represents an energy curve of background sound of the segment of audio. Both the first energy threshold curve and the second energy threshold curve may be obtained based on the silence energy curve, that is, both the first energy threshold and the second energy threshold may be obtained based on energy of the background sound.

It should be noted that, in different background environments, silence energy curves are different. For example, in a comparatively quiet environment, silence energy (that is, energy of background sound) is comparatively low, whereas in a comparatively noisy environment, silence energy (that is, energy of background sound) is comparatively high. Therefore, obtaining the first energy threshold curve and the second energy threshold curve based on the silence energy curve can adapt to requirements in different environments.

As shown in FIG. 2, energy of the audio frames in the audio data is compared with the two thresholds, so that the audio frames are classified into three sound categories: "speech" (SPE shown in the figure), "neutral" (NEU shown in the figure), and "silence" (SIL shown in the figure). As shown in FIG. 2, a sound category sequence of the audio frame sequence is "SPE NEU SIL SIL NEU SPE NEU SIL NEU SPE NEU NEU SPE NEU SIL" from left to right.

The processing module 120 may be a processor that can perform data processing, for example, a central processing unit or a microprocessor, or may be another apparatus, chip, integrated circuit, or the like that can perform computing.

The decision module 130 is configured to obtain a speech ending point of the audio data based on the sound categories and the semantics that are from the processing module 120. The speech ending point is a detection result of a speech ending state.

Optionally, if the obtaining module 110 obtains the audio data in real time, audio data obtaining may be ended after the detection result is obtained.

For example, the decision module 130 may obtain the speech ending point based on the sound categories of all of the plurality of audio frames and the semantics.

For example, text endpoints likely to be the speech ending point may be preliminarily determined based on the semantics, and then, based on a sound category of each text endpoint, the speech ending point is found from the text endpoints likely to be the speech ending point. For another example, candidate audio frames likely to be the speech ending point may be preliminarily determined based on the sound categories, and then the speech ending point is determined based on semantics preceding these candidate audio frames.

The plurality of audio frames include a first audio frame and a second audio frame, the first audio frame is an audio frame bearing the semantics, and the second audio frame is an audio frame subsequent to the first audio frame in the plurality of audio frames. The decision module 130 may obtain the speech ending point based on the semantics and a sound category of the second audio frame.

The first audio frame is a plurality of audio frames bearing the semantics. The second audio frame is one or more audio frames subsequent to the first audio frame.

It should be noted that the "plurality of audio frames bearing the semantics" and the "plurality of audio frames" included in the audio data are different concepts. A quantity of the audio frames included in the first audio frame is less than a quantity of the audio frames included in the audio data.

Further, the decision module 130 integrates the semantics and the sound category of the second audio frame to obtain an integrated feature, and obtain the speech ending point based on the integrated feature. The integrated feature may be understood as being obtained by superimposing, onto the audio stream bearing the semantics, one or more subsequent audio frames whose sound category is determined. For example, it is assumed that a segment of audio data includes "I want to watch television" and five audio frames subsequent to "television". Through extraction of sound categories and semantics, the semantics "I want to watch television" and the sound categories of the five subsequent audio frames may be obtained. In this case, an integrated feature is obtained by superimposing the five audio frames having the sound categories onto a plurality of audio frames bearing the semantics "I want to watch television". Compared with the foregoing direct processing, processing by using the integrated feature can improve processing efficiency, and can also improve accuracy.

Optionally, speech endpoint categories may include "speaking", "thinking", and "ending". The decision module 130 may determine a speech endpoint category of the audio data based on the semantics and the sound category of the second audio frame, and obtain the speech ending point when the speech endpoint category of the audio data is "ending".

That the speech endpoint category of the audio data is "ending" may be understood as that the audio data includes a text endpoint whose speech endpoint category is "ending". An audio frame corresponding to the text endpoint whose speech endpoint category is "ending" may be used as the speech ending point.

Further, when the integrated feature is obtained, the decision module 130 determines the speech endpoint category of the audio data based on the integrated feature, and obtains the speech ending point when the speech endpoint category of the audio data is "ending".

In some implementations, the decision module 130 may further process the semantics and the sound category of the second audio frame by using a speech endpoint classification model, to obtain the speech endpoint category, thereby obtaining the speech ending point of the audio data.

Further, when the integrated feature is obtained, the decision module 130 may process the integrated feature by using the speech endpoint classification model, to obtain the speech endpoint category, thereby obtaining the speech ending point of the audio data.

In other words, the integrated feature is input as one input feature into the speech endpoint classification model for processing, to obtain the speech endpoint category, thereby obtaining the speech ending point of the audio data.

It should be understood that this is merely an example. For example, alternatively, the decision module 130 may directly input, without processing the semantics and the sound category of the second audio frame, the semantics and the sound category of the second audio frame as two input features into the speech endpoint classification model for processing.

It should be noted that the speech recognition apparatus 100 is embodied in a form of a functional module, and the term "module" herein may be implemented in a form of software and/or hardware. This is not limited in this embodiment of this application. Division into the foregoing modules is merely logical function division, and there may be another division manner during actual implementation. For example, a plurality of modules may be integrated into one module. In other words, the obtaining module 110, the processing module 120, and the decision module 130 may be integrated into one module. Alternatively, each of the plurality of modules may exist independently. Alternatively, two of the plurality of modules are integrated into one module. For example, the decision module 130 may be integrated into the processing module 120.

The plurality of modules may be deployed on same hardware, or may be deployed on different hardware. In other words, functions that need to be performed by the plurality of modules may be performed by same hardware, or may be performed by different hardware. This is not limited in this embodiment of this application.

The speech endpoint categories may include "speaking (speaking)", "thinking (thinking)", and "ending (ending)". "Speaking" may be understood as ongoing speaking, that is, such an endpoint is neither a termination endpoint nor a stop endpoint; "thinking" may be understood as considering or a temporary pause, that is, such an endpoint is merely a pause endpoint, and there may yet be speech subsequently; and "ending" may be understood as stopping or termination, that is, such an endpoint is a speech termination endpoint.

In some implementations, the speech endpoint classification model may be obtained by using a language-class model, for example, by using a bidirectional encoder representations from transformers (bidirectional encoder representations from transformers, BERT) model. The following uses the BERT model as an example for description, but it should be understood that any other language-class model that can perform the foregoing classification may be alternatively used.

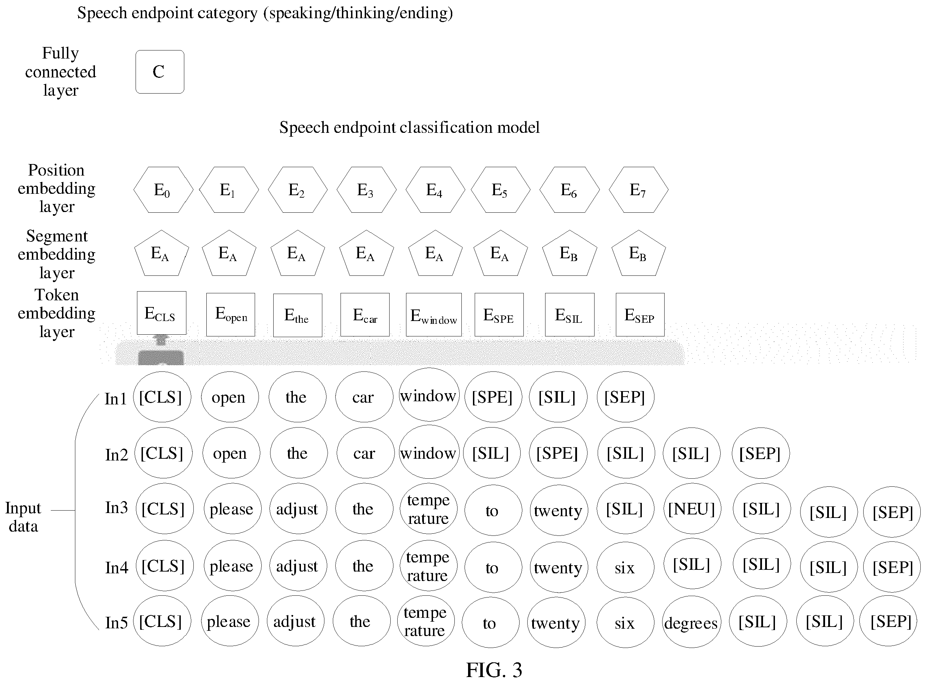

FIG. 3 is a schematic diagram of processing an integrated feature by a classification model according to an embodiment of this application. As shown in FIG. 3, the classification model may be a BERT model. The BERT model includes an embedding layer and a fully connected layer (represented by a white box C in FIG. 3). The embedding layer includes a token embedding layer (token embeddings), a segment embedding layer (segment embeddings), and a position embedding layer (position embeddings). The embedding layer outputs, to the fully connected layer, a result obtained by processing input data (that is, the integrated feature). The fully connected layer further obtains the foregoing speech endpoint category.

As shown in FIG. 3, the input data provides an example of five integrated features, respectively represented by In1 to In5 in FIG. 3. In1 is "[CLS] open the car window [SPE] [SIL] [SEP]". In2 is "[CLS] open the car window [SIL] [SPE] [SIL] [SIL] [SEP]". In3 is "[CLS] please adjust the temperature to twenty [SIL] [NEU] [SIL] [SIL] [SEP]". In4 is "[CLS] please adjust the temperature to twenty six [SIL] [SIL] [SIL] [SEP]". In5 is "[CLS] please adjust the temperature to twenty six degrees [SIL] [SIL] [SEP]". Each circle represents one element. [CLS] is start data of the input data of the BERT model, or may be referred to as an initiator. [SEP] is end data of the input data of the BERT model, or may be referred to as a terminator. In other words, in the example, a format of the integrated feature is "[CLS]+semantics+sound category+[SEP]".

As shown in FIG. 3, EX represents an energy value of X. For example, ECLS represents energy corresponding to [CLS]. Through input data processing performed by the embedding layer and the fully connected layer of the BERT model, the speech endpoint category can be obtained.

FIG. 3 is merely a specific example of the speech endpoint classification model, and does not constitute any limitation. A speech endpoint classification model training method is described below, and is not further described herein.

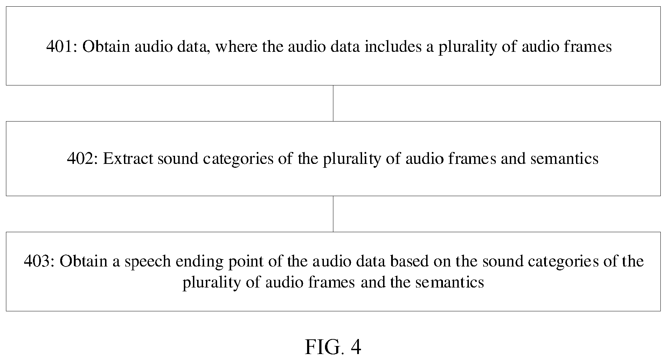

FIG. 4 is a schematic flowchart of a speech recognition method according to an embodiment of this application. The following describes each step in FIG. 4. The method shown in FIG. 4 may be performed by an electronic device. The electronic device may specifically include one or more of apparatuses such as a computer, a smartphone, a tablet computer, a personal digital assistant (personal digital assistant, PDA), a wearable device, a smart speaker, a television, an unmanned aerial vehicle, a vehicle, an in-vehicle chip, a vehicle-mounted apparatus (for example, in-vehicle infotainment or a vehicle-mounted computer), and a robot. Alternatively, the method 400 shown in FIG. 4 may be performed by a cloud service device. Alternatively, the method 400 shown in FIG. 4 may be performed by a system that includes a cloud service device and a terminal device, for example, an in-vehicle system or a smart home system.

For example, the method shown in FIG. 4 may be performed by the speech recognition apparatus 100 in FIG. 1.

401: Obtain audio data, where the audio data includes a plurality of audio frames.

The audio data may be obtained by using a speech capture apparatus such as a microphone, or the audio data may be obtained from a storage apparatus or a network. The audio data may be obtained in real time, or may be already stored. Step 401 may be performed by using the foregoing obtaining module 110. For related descriptions of the audio data and a manner of obtaining the audio data, refer to the foregoing descriptions. Details are not described again.

The audio frames may be obtained by performing a framing operation on the audio data. For example, duration of one audio frame may be a dozen milliseconds or dozens of milliseconds.

402: Extract sound categories of the plurality of audio frames and semantics.

Step 402 may be performed by using the foregoing processing module 120. For descriptions of the sound categories and the semantics, refer to the foregoing descriptions. Details are not described again. It should be understood that a sound category may be extracted from each audio frame, but semantics may not be extracted from each audio frame. Specifically, an audio frame that includes no human voice has no semantics. Therefore, no semantics can be extracted from an audio frame that includes no speech. In this case, semantics of an audio frame that includes no speech may be considered as empty or null.

Optionally, the sound categories may be obtained based on relationships between energy of the audio frames and preset energy thresholds. For example, the preset energy thresholds may include a first energy threshold and a second energy threshold, and the first energy threshold is greater than the second energy threshold. A sound category of an audio frame whose energy is greater than or equal to the first energy threshold in the plurality of audio frames may be determined as "speech". A sound category of an audio frame whose energy is less than the first energy threshold and greater than the second energy threshold in the plurality of audio frames is determined as "neutral", where the first energy threshold is greater than the second energy threshold. A sound category of an audio frame whose energy is less than or equal to the second energy threshold in the plurality of audio frames is determined as "silence".

Optionally, an audio stream bearing the semantics may be obtained by using an apparatus such as an automatic speech recognition apparatus. Each segment of the audio stream may be represented by a corresponding text. Each segment of the audio stream may include one or more audio frames.

For example, the sound categories of the plurality of audio frames may include a sound category of each of the plurality of audio frames.

Alternatively, the sound categories of the plurality of audio frames may include sound categories of some of the plurality of audio frames.

In other words, in step 402, sound categories of all of the plurality of audio frames may be extracted, or sound categories of only some of the plurality of audio frames may be extracted.

It should be noted that a sound category may be extracted from each audio frame, that is, a sound category corresponding to each audio frame may be obtained. Usually, a plurality of audio frames correspond to one word, or in other words, one word is borne by a plurality of audio frames. FIG. 3 is used as an example. Each word in "open the car window" in FIG. 3 corresponds to a plurality of audio frames, and each sound category corresponds to one audio frame.

403: Obtain a speech ending point of the audio data based on the sound categories and the semantics.

For example, step 403 may be performed by using the foregoing decision module 130.

Optionally, the method 400 further includes step 404 (not shown in the figure).

404: After obtaining the speech ending point, respond to an instruction corresponding to audio data that is prior to the speech ending point in the audio data.

In other words, an operation corresponding to the audio data that is prior to the speech ending point in the audio data may be performed after the speech ending point is obtained. The operation corresponding to an audio signal that is prior to the speech ending point in the audio data may also be understood as an operation corresponding to speech ending.

It should be noted that the operation corresponding to the audio data that is prior to the speech ending point in the audio data may be performed immediately after the speech ending point is obtained; or the operation corresponding to the audio data that is prior to the speech ending point in the audio data may be performed after a period of time after the speech ending point is obtained. The period of time may be a redundant time, an error time, or the like.

The operation corresponding to speech ending may be an operation in any service processing function.

For example, after the speech ending point is obtained, speech recognition may be stopped. Alternatively, after the speech ending point is obtained, a speech recognition result may be returned to a user. Alternatively, after the speech ending point is obtained, a speech recognition result may be sent to a subsequent module, so that the subsequent module performs a corresponding operation. For example, the audio data may include a control instruction, and the subsequent module performs a control operation corresponding to the instruction. For example, the audio data may include a query instruction, and the subsequent module returns an answer statement corresponding to the query instruction to the user.

The operation corresponding to speech ending, that is, step 404, may be performed by an execution apparatus of the method 400, or may be performed by another apparatus. This is not limited in this embodiment of this application.

The following provides descriptions by using an example in which an audio signal includes a user instruction. The user instruction may be used to implement various functions such as obtaining a route, playing music, and controlling hardware (for example, a light or an air conditioner). Controlling an air conditioner is used as an example. In this case, the user instruction may be "turn on the air conditioner". It should be understood that the subsequent module may be one module, or may be a plurality of modules.

For example, after the speech ending point is obtained, indication information may be sent to the subsequent module, where the indication information indicates the speech ending point, so that the subsequent module can obtain the audio data that is prior to the speech ending point in the audio data, obtain a semantic text (for example, "turn on the air conditioner") based on the audio data, then parse out the user instruction based on the semantic text, and control a corresponding module to perform an operation indicated by voice instruction.

For example, after the speech ending point is obtained, the ASR is instructed to stop speech recognition, and the ASR sends a speech recognition result (for example, the semantic text of "turn on the air conditioner") to a semantic analysis module, so that the semantic analysis module parses out the user instruction, and sends a control signal to the air conditioner, to control the air conditioner to be turned on.

For example, after the speech ending point is obtained, the audio data that is prior to the speech ending point in the audio data may be sent to the subsequent module, so that the subsequent module obtains a semantic text (for example, "turn on the air conditioner") based on the audio data, then parses out the user instruction based on the semantic text, and controls a corresponding module to perform an operation indicated by voice instruction.

For example, after the speech ending point is obtained, a semantic text (for example, "turn on the air conditioner") may be obtained based on the audio data, then the user instruction is parsed out based on the semantic text, and a corresponding module is controlled to perform an operation indicated by voice instruction.

For example, the speech ending point may be obtained based on the sound categories of all of the plurality of audio frames and the semantics.

For example, text endpoints likely to be the speech ending point may be preliminarily determined based on the semantics, and then, based on a sound category of each text endpoint, the speech ending point is found from the text endpoints likely to be the speech ending point. For another example, candidate audio frames likely to be the speech ending point may be preliminarily determined based on the sound categories, and then the speech ending point is determined based on semantics preceding these candidate audio frames.

The plurality of audio frames include a first audio frame and a second audio frame, the first audio frame is an audio frame bearing the semantics, and the second audio frame is an audio frame subsequent to the first audio frame in the plurality of audio frames. The speech ending point may be obtained based on the semantics and a sound category of the second audio frame.

The first audio frame is a plurality of audio frames bearing the semantics. The second audio frame is one or more audio frames subsequent to the first audio frame.

It should be noted that the "plurality of audio frames bearing the semantics" and the "plurality of audio frames" included in the audio data are different concepts. A quantity of the audio frames included in the first audio frame is less than a quantity of the audio frames included in the audio data.

Further, the semantics and the sound category of the second audio frame are integrated to obtain an integrated feature, and the speech ending point is obtained based on the integrated feature. Processing by using the integrated feature can improve processing efficiency, and can also improve accuracy.

In some implementations, speech endpoint categories may include "speaking", "thinking", and "ending"; and a speech endpoint category of the audio data may be determined based on the semantics and the sound category of the second audio frame, and the speech ending point is obtained when the speech endpoint category of the audio data is "ending".

That the speech endpoint category of the audio data is "ending" may be understood as that the audio data includes a text endpoint whose speech endpoint category is "ending". An audio frame corresponding to the text endpoint whose speech endpoint category is "ending" may be used as the speech ending point.

Further, when the integrated feature is obtained, the speech endpoint category of the audio data may be determined based on the integrated feature, and the speech ending point is obtained when the speech endpoint category of the audio data is "ending".

Optionally, the semantics and the sound category of the second audio frame may be processed by using a speech endpoint classification model, to obtain the speech endpoint category, thereby obtaining the speech ending point of the audio data.

Further, when the integrated feature is obtained, the integrated feature may be processed by using the speech endpoint classification model, to obtain a speech endpoint category of the integrated feature, thereby obtaining the speech ending point of the audio data.

The speech endpoint classification model may be obtained by using a speech sample and an endpoint category label of the speech sample. In addition, a format of the speech sample corresponds to a format of the integrated feature, and an endpoint category included in the endpoint category label corresponds to the speech endpoint category.

In the solution shown in FIG. 4, the speech ending point of the audio data is obtained by extracting and combining the sound category and the semantics in the audio data, so that the speech ending point of the audio data can be determined more accurately.

It should be understood that the audio data may be audio data obtained in real time, or may be stored audio data that is read. These two cases may be respectively understood as online speech recognition and offline speech recognition. After the speech ending point is obtained, the speech ending point may be used to perform a subsequent operation such as speech-based control. For example, the speech ending point may be used to control a switch of an electronic device, may be used to perform information query, or may be used to control playing of audio/video. In the case of online speech recognition, after the speech ending point is obtained, audio data obtaining may be ended, that is, speech recognition may be stopped. Alternatively, in the case of online speech recognition, after the speech ending point is obtained, the instruction corresponding to the audio data that is prior to the speech ending point may be executed, and audio data obtaining continues.

According to the solution in this embodiment of this application, the speech ending point can be obtained more accurately, thereby responding to a speech-based subsequent operation more accurately, and improving user experience. Specifically, according to the solution in this application, an excessively long response delay caused by delayed speech ending point detection can be avoided, so that the speech ending point is obtained more quickly, so as to make a subsequent response in a timely manner, thereby reducing a waiting time of the user, and improving user experience. In addition, according to the solution in this application, an accurate speech ending point can be obtained, so that a voice instruction of the user is not prematurely cut off due to premature speech ending point detection, and audio data with complete semantics is obtained, thereby helping accurately identify a user intention, so as to make an accurate response, and improve user experience.

For example, it is assumed that, in a scenario of controlling an electronic device by using a voice, a user generates audio data of 7 seconds in total, where audio of the first 3 seconds is speech of "please turn on the air conditioner", audio of the fourth second is a pause of 1 second, and audio of the fifth to the seventh seconds is cough sound. If the solution in this embodiment of this application is used, the word "conditioner" can be accurately obtained as a speech ending point, and in this case, speech obtaining may be ended after the third second or in the fourth second. In a conventional method based on activity detection, a fixed waiting time needs to be set, and speech obtaining is not ended until an actual waiting time is greater than or equal to the fixed waiting time. It is assumed that the method based on activity detection is used herein, and the fixed waiting time is 2 seconds. In this case, the pause of 1 second is considered as a temporary pause, and speech recognition continues. Therefore, the subsequent cough sound of 3 seconds continues to be recognized, and after the cough sound, the fixed waiting time still needs to be waited. Compared with the solution in this embodiment of this application, in the method based on activity detection, ending of speech obtaining is delayed by at least 5 seconds in total.

It is assumed that, in a scenario of controlling an electronic device by using a voice, a user generates audio data of 6 seconds in total, which is "please call Qian Yi'er", but there is a pause of 1.5 seconds after the word "Qian", and it is assumed that the fixed waiting time in the method based on activity detection is 1.5 seconds. If the solution in this embodiment of this application is used, the word "er" can be accurately obtained as a speech ending point. Based on semantic information, the word "Qian" cannot be used as an "ending" endpoint unless "Qian" is followed by more audio frames whose sound categories are "silence". Therefore, speech obtaining is not ended after the pause of 1.5 seconds, but is ended in the sixth second or after the sixth second. However, if the method based on activity detection is used, speech obtaining is ended upon ending of the pause of 1.5 seconds after the word "Qian". As a result, a speech ending point is incorrectly determined, and a subsequent control policy cannot be responded to.

When the solution in this embodiment of this application is used to perform speech recognition, a waiting time before a speech ending point is not fixed, but changes with an actual speech recognition process. Compared with an existing manner in which a fixed waiting time is preset and a speech ending point is obtained after the waiting time ends, in this solution, a speech ending point can be obtained more accurately, thereby improving timeliness and accuracy of a subsequent response, reducing waiting duration of a user, and improving user experience.

An embodiment of this application further provides a speech recognition method 500. The method 500 includes step 501 to step 506. The following describes each step of the method 500. The method 500 may be understood as an example of an online speech recognition method.

501: Obtain first audio data.

The first audio data may be obtained in real time. The first audio data may include a plurality of audio frames.

502: Determine a first speech ending point of the first audio data.

Optionally, the first audio data includes a plurality of audio frames. Step 502 may include: extracting sound categories of the plurality of audio frames and semantics; and obtaining the first speech ending point of the first audio data based on the sound categories of the plurality of audio frames and the semantics.

For a specific method for determining the first speech ending point, refer to the foregoing method 400. The "audio data" in the method 400 merely needs to be replaced with the "first audio data". Details are not described herein again.

503: After obtaining the first speech ending point, respond to an instruction corresponding to audio data that is prior to the first speech ending point in the first audio data.

In other words, an operation corresponding to the audio data that is prior to the first speech ending point may be performed after the first speech ending point is obtained.

For ease of description, the instruction corresponding to the audio data that is prior to the first speech ending point in the first audio data is referred to as a first user instruction.

The first speech ending point is a speech ending point of the first user instruction. The first audio data may include only one user instruction, and the speech ending point of the instruction can be identified by performing step 502.

504: Obtain second audio data.

It should be noted that sequence numbers of the steps in the method 500 are merely used for ease of description, and do not constitute any limitation on an execution sequence of the steps. In the method 500, an audio data processing process and an audio data obtaining process may be independent of each other. In other words, when step 502 is being performed, audio data obtaining may continue, that is, step 504 may be performed, provided that the second audio data is audio data obtained after the first audio data.

For example, the first audio data and the second audio data may be consecutively captured audio data.

505: Determine a second speech ending point of the second audio data.

Optionally, the second audio data includes a plurality of audio frames. Step 502 may include: extracting sound categories of the plurality of audio frames and semantics; and obtaining the second speech ending point of the second audio data based on the sound categories of the plurality of audio frames and the semantics.

Alternatively, audio data including the second audio data and audio data that is subsequent to the first speech ending point and that is in the first audio data includes a plurality of audio frames, and step 502 may include: extracting sound categories of the plurality of audio frames and semantics; and obtaining the second speech ending point of the second audio data based on the sound categories of the plurality of audio frames and the semantics.

For example, the audio data that is subsequent to the first speech ending point and that is in the first audio data includes four audio frames, and the second audio data includes 10 audio frames. In this case, the audio data including the four audio frames and the 10 audio frames includes 14 audio frames. The sound categories of the 14 audio frames and the semantics are extracted, and the second speech ending point of the second audio data is obtained based on the sound categories of the 14 audio frames and the semantics.

For a specific method for determining the second speech ending point, refer to the foregoing method 400. Details are not described herein again.

506: After obtaining the second speech ending point, respond to an instruction corresponding to audio data between the first speech ending point in the first audio data and the second speech ending point in the second audio data.

For example, the audio data that is subsequent to the first speech ending point and that is in the first audio data includes four audio frames, and the second audio data includes 10 audio frames. In this case, the audio data including the four audio frames and the 10 audio frames includes 14 audio frames, where the second speech ending point of the second audio data is located in the twelfth audio frame. After the second speech ending point is obtained, an instruction corresponding to audio data that is prior to the twelfth audio frame in the 14 audio frames is responded to.

For ease of description, the instruction corresponding to the audio data between the first speech ending point in the first audio data and the second speech ending point in the second audio data is referred to as a second user instruction.

The second speech ending point is a speech ending point of the second user instruction. The audio data including the second audio data and the audio data that is subsequent to the first speech ending point and that is in the first audio data may include only one user instruction, and the speech ending point of the instruction can be identified by performing step 505. The first user instruction and the second user instruction may be two user instructions consecutively sent by a user, that is, a time interval between the two user instructions is comparatively small. For example, when the first audio data and the second audio data are consecutively captured audio data, a time interval between the first user instruction and the second user instruction is comparatively small. The solution in this application helps distinguish between the speech ending point of the first user instruction and the speech ending point of the second user instruction.

According to the solution in this embodiment of this application, the speech ending point can be obtained more accurately, and an excessively long response delay caused by delayed speech ending point detection is avoided, so that the speech ending point is obtained more quickly, so as to make a subsequent response in a timely manner, thereby reducing a waiting time of the user, and improving user experience. Specifically, in the solution in this embodiment of this application, obtaining audio data in real time and identifying a speech ending point in the audio data helps identify speech ending points of different instructions in real time and respond to each instruction after a speech ending point of the instruction is obtained. Particularly, when an interval between a plurality of instructions sent by the user is comparatively short, using the solution in this application helps identify a speech ending point of each instruction after the instruction is sent, so as to respond to each instruction in a timely manner, instead of responding to all the instructions after the plurality of instructions are all sent.

For example, it is assumed that, in a scenario of controlling an electronic device by using a voice, a user generates audio data of 8 seconds in total, and the audio data of 8 seconds includes two user instructions: "please close the car window" and "please turn on the air conditioner". An interval between the two user instructions is comparatively small, for example, 1 second, that is, the user sends the user instruction "please turn on the air conditioner" 1 second after sending the user instruction "please close the car window". If the solution in this embodiment of this application is used, the audio data can be obtained in real time and be processed, to obtain a speech ending point corresponding to the first user instruction. Based on semantic information, the word "window" can be used as an "ending" endpoint provided that "window" is followed by several audio frames whose sound categories are "silence". That is, after several audio frames subsequent to the word "window", it can be determined that speech corresponding to the user instruction ends, so as to perform an operation of closing the car window in response to the user instruction in a timely manner. In addition, according to the solution in this embodiment of this application, the audio data may continue to be obtained and processed, to obtain a speech ending point corresponding to the second user instruction. For example, after several audio frames subsequent to the word "conditioner", it can be determined that speech corresponding to the user instruction ends, so as to perform an operation of turning on the air conditioner in response to the user instruction in a timely manner. If the foregoing fixed waiting time in the method based on activity detection is 1.5 seconds, the foregoing pause of 1 second is considered as a temporary pause, and speech recognition continues. Consequently, the speech ending point corresponding to the first user instruction cannot be obtained. In this case, only after 1.5 seconds after the user sends the second user instruction, speech is considered to be ended, and then corresponding operations are respectively performed in response to the two user instructions.

In other words, according to the solution in this embodiment of this application, the speech ending points corresponding to the plurality of user instructions can be accurately obtained, so that each user instruction is responded to in a timely manner. Particularly, when a time interval between the plurality of user instructions is comparatively small, according to the solution in this embodiment of this application, a speech ending point of each user instruction can be obtained more accurately, which is conducive to making a response in a timely manner after each user instruction is sent, instead of making a response after the user sends all of the user instructions.

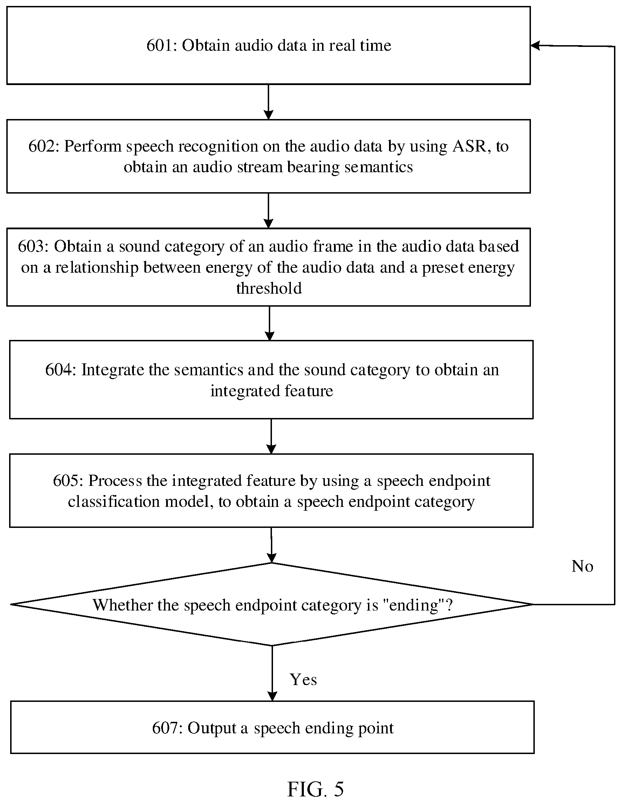

FIG. 5 is a schematic flowchart of a speech recognition method according to an embodiment of this application. FIG. 5 may be considered as a specific example of the method shown in FIG. 4. In the example, audio data obtaining and speech recognition are performed in real time.

601: Obtain audio data in real time.

The audio data may be obtained by using a speech capture device such as a microphone.

Alternatively, step 601 may be performed by using the foregoing obtaining module 110.

602: Perform speech recognition on the audio data by using ASR, to obtain an audio stream bearing semantics.

Step 602 is a specific example of a method for obtaining semantics, that is, an example of obtaining semantics by using ASR.

Optionally, if the ASR identifies that the audio stream is ended, step 607 may be directly performed without performing steps 603 to 606. This is equivalent to a case in which there has been no speech recognized in the obtained audio data for a comparatively long time interval, and a speech ending point no longer needs to be further determined.

Step 602 may be performed by using the foregoing processing module 120.

603: Obtain a sound category of an audio frame in the audio data based on a relationship between energy of the audio data and a preset energy threshold.

Step 603 is a specific example of a method for obtaining a sound category.

Step 602 and step 603 may be performed at the same time, or may be performed at different times, and an execution sequence is not limited. Step 602 and step 603 may be considered as a specific example of step 402.

Step 603 may be performed by using the foregoing processing module 120.

604: Integrate the semantics and the sound category to obtain an integrated feature.

The integrated feature may be obtained by superimposing the semantics and the sound category.

For example, step 602 may be performed in real time, that is, speech recognition is performed on the obtained audio data in real time. In step 604, each time one word is recognized, current semantics and a sound category of one or more audio frames subsequent to the word may be superimposed to obtain an integrated feature, and the integrated feature is input to a subsequent speech endpoint classification model for processing (that is, step 605). For example, it is assumed that a complete instruction to be sent by a user is "I want to watch television", and a currently sent instruction is "I want to watch". Speech recognition is performed on currently obtained audio data through step 602. After the word "watch" is recognized, an integrated feature may be obtained based on semantics of "I want to watch" and a sound category of one or more audio frames subsequent to "watch". Then, the integrated feature is input to the speech endpoint classification model in step 605 for processing. After the user continues to send "television", speech recognition is performed on currently obtained audio data through step 602. After the word "television" is recognized, an integrated feature may be obtained based on semantics of "I want to watch television" and a sound category of one or more audio frames subsequent to "television". Then, the integrated feature is input to the speech endpoint classification model in step 605 for processing.

Compared with the foregoing direct processing, processing by using the integrated feature can improve processing efficiency, and can also improve accuracy. For specific content, reference may also be made to descriptions about the input data in FIG. 3. Details are not described herein again.

Step 604 may be performed by using the foregoing decision module 130.

605: Process the integrated feature by using the speech endpoint classification model, to obtain a speech endpoint category.

Speech endpoint categories include "speaking", "thinking", and "ending". When the speech endpoint category is "ending", an audio frame corresponding to such an endpoint is a speech ending point.

A combination of step 604 and step 605 is a specific example of step 403.

Step 605 may be performed by using the foregoing decision module 130.

606: Determine whether the speech endpoint category is "ending", and perform step 607 when a determining result is "yes", or perform step 601 when a determining result is "no".

Step 606 may be performed by using the foregoing decision module 130.

607: Output the speech ending point.

Step 607 may be performed by using the foregoing decision module 130.

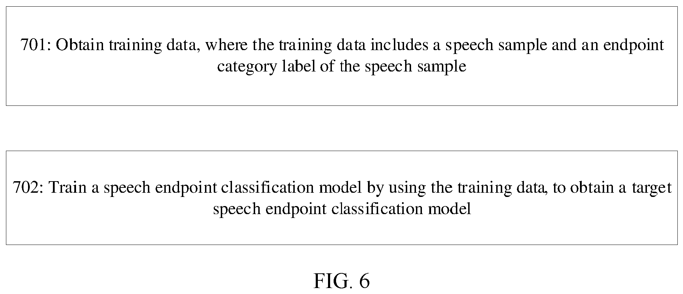

FIG. 6 is a schematic flowchart of a speech endpoint classification model training method according to an embodiment of this application. The following describes each step shown in FIG. 6.

701: Obtain training data, where the training data includes a speech sample and an endpoint category label of the speech sample.

Optionally, a format of the speech sample may correspond to a format of the foregoing data that is input to the speech endpoint classification model, and an endpoint category included in the endpoint category label may correspond to the foregoing speech endpoint category. That is, the speech sample includes a sound category and semantics of audio data, and endpoint category labels include "speaking", "thinking", and "ending".

The foregoing data that is input to the speech endpoint classification model is input data in a reasoning phase of the speech endpoint classification model, for example, the semantics and the sound category of the second audio frame that are described above. In other words, the format of the speech sample may correspond to a format of the semantics and the sound category of the second audio frame that are described above. For another example, the input data in the reasoning phase of the speech endpoint classification model may be the foregoing integrated feature. In other words, the format of the speech sample may correspond to a format of the foregoing integrated feature.

In some implementations, the speech sample may be in a format of "initiator+semantics+sound category+terminator", or the speech sample may be in a format of "initiator+sound category+semantics+terminator".

Optionally, some text corpuses may be obtained, and a dictionary tree of these corpuses is established, where each node (each node corresponds to one word) in the dictionary tree includes the following information: whether the node is an end point, and prefix frequency. Then, the speech sample may be generated based on the node information. The end point is an ending point of one sentence. The prefix frequency is used to represent a quantity of words between the word and the ending point. Higher prefix frequency indicates a smaller possibility that the word is the end point. For example, a verb such as "give" or "take" or another word such as a preposition has a comparatively small possibility of being used as an end of a statement, and usually has comparatively high prefix frequency in the dictionary tree; whereas a word such as "right?" or "correct?" has a comparatively large possibility of being used as an end of a statement, and usually has comparatively low prefix frequency in the dictionary tree.

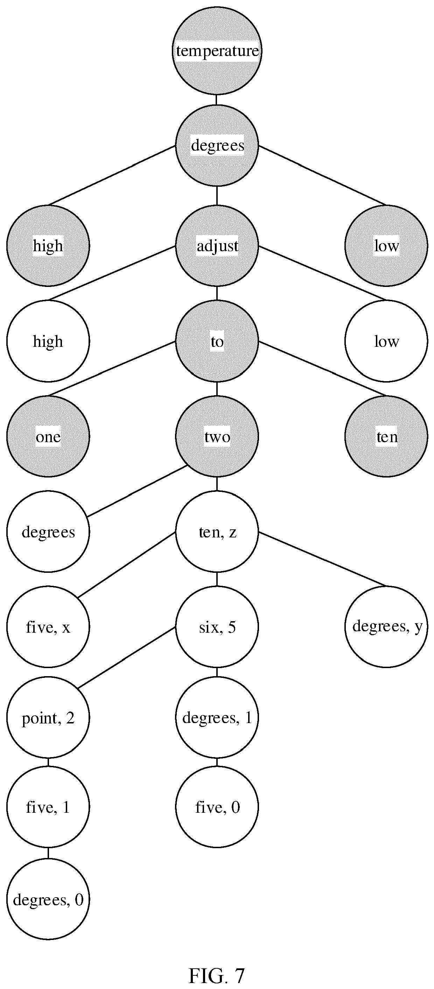

If a node is not an end point, an endpoint category label of plain text (that is, semantics) of the node is "speaking", and an endpoint category label of signal classification information (that is, a sound category) is "thinking". If a node is an end point, a speech sample with different endpoint category labels is generated based on prefix frequency and signal classification information (that is, a sound category). Higher prefix frequency indicates that more audio frames whose sound categories are "silence" need to be added for such a node to be marked as "ending". The following provides descriptions with reference to FIG. 7.

FIG. 7 is a schematic diagram of a dictionary tree according to an embodiment of this application. In the dictionary tree shown in FIG. 7, each node includes one word, a gray circle indicates that such a node is not an end point, a white circle indicates that such a node is an end point, and prefix frequency is represented by a number or a letter (for example, 0, 1, 2, x, y, and z obtained in the figure). For example, "five, 0" in a white circle indicates that such a node is an end point, and prefix frequency is 0; and "ten, z" in a white circle indicates that such a node is an end point, and prefix frequency is z=x+5+y+2+1+0+0, that is, a sum of prefix frequency of all nodes from the node to an end of the dictionary tree. It should be understood that the letters in FIG. 7 are used to describe a method for marking prefix frequency of nodes in the dictionary tree. In practice, no letter needs to be introduced, and after a dictionary tree is established, prefix frequency of a node in the dictionary tree is fixed.

Step 701 may be performed by a training device. For example, the training device may be a cloud service device, or may be a terminal device, for example, an apparatus such as a computer, a server, a mobile phone, a smart speaker, a vehicle, an unmanned aerial vehicle, or a robot, or may be a system that includes a cloud service device and a terminal device. This is not limited in this embodiment of this application.

702: Train a speech endpoint classification model by using the training data, to obtain a target speech endpoint classification model.

For the speech endpoint classification model, refer to the foregoing descriptions. Details are not enumerated again. The target speech endpoint classification model may be used to obtain a speech ending point of audio data based on a sound category and semantics. The target speech endpoint classification model may be used to perform step 403, or may be used by the decision module 130 to obtain the speech ending point.

Step 702 may be performed by the training device.

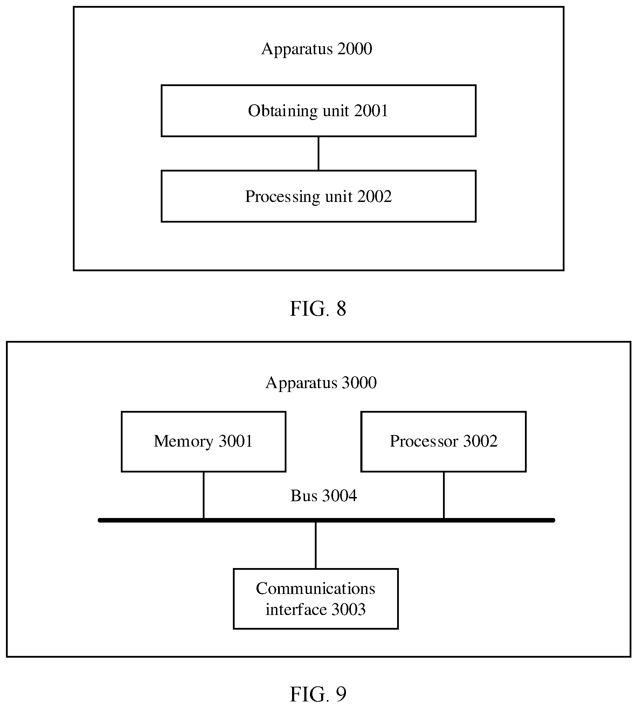

FIG. 8 is a schematic block diagram of a speech recognition apparatus according to an embodiment of this application. The apparatus 2000 shown in FIG. 8 includes an obtaining unit 2001 and a processing unit 2002.

The obtaining unit 2001 and the processing unit 2002 may be configured to perform the speech recognition method in the embodiments of this application. For example, the obtaining unit 2001 may perform step 401, and the processing unit 2002 may perform steps 402 and 403. For another example, the obtaining unit 2001 may perform step 501 and step 504, and the processing unit 2002 may perform steps 502 and 503 and steps 505 and 506. For another example, the obtaining unit 2001 may perform step 601, and the processing unit 2002 may perform steps 602 to 606.

The obtaining unit 2001 may include the obtaining module 110, and the processing unit 2002 may include the processing module 120 and the decision module 130.

It should be understood that the processing unit 2002 in the apparatus 2000 may be equivalent to a processor 3002 in an apparatus 3000 described below.

It should be noted that the apparatus 2000 is embodied in a form of a functional unit. The term "unit" herein may be implemented in a form of software and/or hardware. This is not specifically limited.

For example, the "unit" may be a software program, a hardware circuit, or a combination thereof for implementing the foregoing function. The hardware circuit may include an application-specific integrated circuit (application-specific integrated circuit, ASIC), an electronic circuit, a processor (for example, a shared processor, a dedicated processor, or a group processor) configured to execute one or more software or firmware programs and a memory, a combined logic circuit, and/or another suitable component that supports the described function.

Therefore, the units in the examples described in the embodiments of this application can be implemented by using electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

FIG. 9 is a schematic diagram of a hardware structure of a speech recognition apparatus according to an embodiment of this application. The speech recognition apparatus 3000 (the apparatus 3000 may be specifically a computer device) shown in FIG. 9 includes a memory 3001, a processor 3002, a communications interface 3003, and a bus 3004. The memory 3001, the processor 3002, and the communications interface 3003 are communicatively connected to each other by using the bus 3004.

The memory 3001 may be a read-only memory (read-only memory, ROM), a static storage device, a dynamic storage device, or a random access memory (random access memory, RAM). The memory 3001 may store a program. When the program stored in the memory 3001 is executed by the processor 3002, the processor 3002 and the communications interface 3003 are configured to perform the steps of the speech recognition method in the embodiments of this application.

The processor 3002 may be a general-purpose central processing unit (central processing unit, CPU), a microprocessor, an ASIC, a graphics processing unit (graphics processing unit, GPU), or one or more integrated circuits, and is configured to execute a related program, so as to implement a function that needs to be performed by the processing unit 2002 in the speech recognition apparatus in the embodiments of this application, or perform the speech recognition method in the method embodiments of this application.

Alternatively, the processor 3002 may be an integrated circuit chip having a signal processing capability. In an implementation process, the steps of the speech recognition method in this application may be implemented by using an integrated logic circuit of hardware in the processor 3002 or instructions in a form of software. Alternatively, the processor 3002 may be a general purpose processor, a digital signal processor (digital signal processor, DSP), an ASIC, a field programmable gate array (field programmable gate array, FPGA) or another programmable logic device, a discrete gate or transistor logic device, or a discrete hardware component, and can implement or perform the methods, steps, and logical block diagrams disclosed in the embodiments of this application. The general purpose processor may be a microprocessor, or the processor may be any conventional processor or the like. The steps of the methods disclosed with reference to the embodiments of this application may be directly implemented by a hardware decoding processor, or may be implemented by using a combination of hardware in a decoding processor and a software module. The software module may be located in a storage medium mature in the art, such as a random access memory, a flash memory, a read-only memory, a programmable read-only memory, an electrically erasable programmable memory, or a register. The storage medium is located in the memory 3001. The processor 3002 reads information in the memory 3001, and implements, in combination with hardware of the processor, functions that need to be performed by the units included in the speech recognition apparatus in the embodiments of this application, or performs the speech recognition method in the method embodiments of this application. For example, the processor 3002 may perform steps 402 and 403. For another example, the processor 3002 may perform steps 502 and 503 and steps 505 and 506. For another example, the processor 3002 may perform steps 602 to 606.

By way of example, and not as a limitation, a transceiver apparatus such as a transceiver is used for the communications interface 3003, to implement communication between the apparatus 3000 and another device or a communications network. The communications interface 3003 may be configured to implement a function that needs to be performed by the obtaining unit 2001 shown in FIG. 8. For example, the communications interface 3003 may perform step 401. For another example, the communications interface 3003 may perform step 501 and step 504. For another example, the communications interface 3003 may perform step 601. That is, the foregoing audio data may be obtained by using the communications interface 3003.

The bus 3004 may include a path for transferring information between the components (for example, the memory 3001, the processor 3002, and the communications interface 3003) of the apparatus 3000.

In an implementation, the speech recognition apparatus 3000 may be disposed in an in-vehicle system. Specifically, the speech recognition apparatus 3000 may be disposed in a vehicle-mounted terminal. Alternatively, the speech recognition apparatus may be disposed in a server.

It should be noted that only an example in which the speech recognition apparatus 3000 is disposed in a vehicle is used herein for description. The speech recognition apparatus 3000 may be alternatively disposed in another device. For example, the apparatus 3000 may be alternatively applied to a device such as a computer, a server, a mobile phone, a smart speaker, a wearable device, an unmanned aerial vehicle, or a robot.

It should be noted that, although only the memory, the processor, and the communications interface are shown in the apparatus 3000 shown in FIG. 9, in a specific implementation process, a person skilled in the art should understand that the apparatus 3000 further includes other components necessary for normal running. In addition, based on a specific requirement, a person skilled in the art should understand that the apparatus 3000 may further include a hardware component for implementing another additional function. In addition, a person skilled in the art should understand that the apparatus 3000 may alternatively include only components necessary for implementing the embodiments of this application, and does not need to include all the components shown in FIG. 9.

A person of ordinary skill in the art may be aware that units and algorithm steps described as examples with reference to the embodiments disclosed in this specification can be implemented by electronic hardware or a combination of computer software and electronic hardware. Whether the functions are performed by hardware or software depends on particular applications and design constraints of the technical solutions. A person skilled in the art may use different apparatuses to implement the described functions for each particular application, but it should not be considered that the implementation goes beyond the scope of this application.

It can be clearly understood by a person skilled in the art that, for ease and brevity of description, for specific working processes of the foregoing system, apparatus, and unit, reference may be made to corresponding processes in the foregoing method embodiments. Details are not described herein again.

In the several embodiments provided in this application, it should be understood that the disclosed system, method, and apparatus may be implemented in other manners. For example, the described apparatus embodiment is merely an example. For example, division into the units is merely logical function division, and there may be another division manner during actual implementation. For example, a plurality of units or components may be combined or may be integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electrical, mechanical, or other forms.

The units described as separate components may be or may not be physically separate, and components displayed as units may be or may not be physical units, and may be located in one position, or may be distributed on a plurality of network units. Some or all of the units may be selected based on an actual requirement to achieve the objectives of the solutions in the embodiments.

In addition, functional units in the embodiments of this application may be integrated into one processing unit, or each of the units may exist alone physically, or two or more units may be integrated into one unit.

When the function is implemented in a form of a software function unit and is sold or used as an independent product, the function may be stored in a computer-readable storage medium. Based on such an understanding, the technical solutions in this application essentially, or the part contributing to a conventional technology, or a part of the technical solutions may be implemented in a form of a software product. The computer software product is stored in a storage medium, and includes several instructions for instructing a computer device (which may be a personal computer, a server, a network device, or the like) to perform all or some of the steps of the method in the embodiments of this application. The foregoing storage medium includes any medium that can store program code, such as a universal serial bus flash disk (USB flash disk, UFD), where the UFD may also be referred to as a USB flash drive, a removable hard disk, a ROM, a RAM, a magnetic disk, or an optical disc.

The foregoing descriptions are merely specific implementations of this application, but are not intended to limit the protection scope of the invention, which is defined by the claims.

## Claims

1. A speech recognition method, comprising:
obtaining (S401) audio data, wherein the audio data comprises a plurality of audio frames;
extracting (S402) sound categories of the plurality of audio frames and semantics; and
obtaining (S403) a speech ending point of the audio data based on the sound categories of the plurality of audio frames and the semantics,
wherein the plurality of audio frames comprise a first audio frame and a second audio frame, the first audio frame is an audio frame bearing the semantics, and the second audio frame is an audio frame subsequent to the first audio frame in the plurality of audio frames; and
the obtaining a speech ending point of the audio data based on the sound categories of the plurality of audio frames and the semantics comprises:
obtaining the speech ending point based on the semantics and a sound category of the second audio frame by integrating the semantics and the sound category of the second audio frame to obtain an integrated feature and by obtaining the speech ending point based on the integrated feature.

2. The method according to claim 1, wherein the method further comprises:
after obtaining the speech ending point, responding to an instruction corresponding to audio data that is prior to the speech ending point in the audio data.

3. The method according to claim 1 or 2, wherein the extracting sound categories of the plurality of audio frames and semantics comprises:
obtaining the sound categories of the plurality of audio frames based on relationships between energy of the plurality of audio frames and preset energy thresholds.

4. The method according to any one of claims 1 to 3, wherein the sound categories comprise "speech", "neutral", and "silence", the preset energy thresholds comprise a first energy threshold and a second energy threshold, and the first energy threshold is greater than the second energy threshold; and
a sound category of an audio frame whose energy is greater than or equal to the first energy threshold in the plurality of audio frames is "speech";
a sound category of an audio frame whose energy is less than the first energy threshold and greater than the second energy threshold in the plurality of audio frames is "neutral"; or
a sound category of an audio frame whose energy is less than or equal to the second energy threshold in the plurality of audio frames is "silence".

5. The method according to claim 4, wherein the first energy threshold and the second energy threshold are determined based on energy of background sound of the audio data.

6. The method according to any one of claims 1 to 5, wherein speech endpoint categories comprise "speaking", "thinking", and "ending", and the obtaining the speech ending point based on the semantics and a sound category of the second audio frame comprises:
determining a speech endpoint category of the audio data based on the semantics and the sound category of the second audio frame, and obtaining the speech ending point when the speech endpoint category of the audio data is "ending".

7. A speech recognition apparatus (100), comprising:
an obtaining unit (110), configured to obtain audio data, wherein the audio data comprises a plurality of audio frames; and
a processing unit (120), configured to extract sound categories of the plurality of audio frames and semantics, wherein
the processing unit is further configured to obtain a speech ending point of the audio data based on the sound categories of the plurality of audio frames and the semantics,
wherein the plurality of audio frames comprise a first audio frame and a second audio frame, the first audio frame is an audio frame bearing the semantics, and the second audio frame is an audio frame subsequent to the first audio frame in the plurality of audio frames; and the processing unit is specifically configured to:
obtain the speech ending point based on the semantics and a sound category of the second audio frame by integrating the semantics and the sound category of the second audio frame to obtain an integrated feature and by obtaining the speech ending point based on the integrated feature.

8. The apparatus according to claim 7, wherein the processing unit is further configured to:
after obtaining the speech ending point, respond to an instruction corresponding to audio data that is prior to the speech ending point in the audio data.

9. The apparatus according to claim 7 or 8, wherein the processing unit is specifically configured to obtain the sound categories of the plurality of audio frames based on relationships between energy of the plurality of audio frames and preset energy thresholds.

10. The apparatus according to any one of claims 7 to 9, wherein the sound categories comprise "speech", "neutral", and "silence", the preset energy thresholds comprise a first energy threshold and a second energy threshold, and the first energy threshold is greater than the second energy threshold; and a sound category of an audio frame whose energy is greater than or equal to the first energy threshold in the plurality of audio frames is "speech";
a sound category of an audio frame whose energy is less than the first energy threshold and greater than the second energy threshold in the plurality of audio frames is "neutral"; or
a sound category of an audio frame whose energy is less than or equal to the second energy threshold in the plurality of audio frames is "silence".

11. The apparatus according to claim 10, wherein the first energy threshold and the second energy threshold are determined based on energy of background sound of the audio data.

12. The apparatus according to any one of claims 7 to 11, wherein speech endpoint categories comprise "speaking", "thinking", and "ending", and the processing unit is specifically configured to:
determine a speech endpoint category of the audio data based on the semantics and the sound category of the second audio frame, and obtain the speech ending point when the speech endpoint category of the audio data is "ending".

13. A computer-readable storage medium, wherein the computer-readable medium stores program code used for execution by a device, and the program code comprises instructions used to perform the method according to any one of claims 1 to 6.

## Patentansprüche

1. Spracherkennungsverfahren, umfassend:
Erlangen (S401) von Audiodaten, wobei die Audiodaten eine Vielzahl von Audioframes umfassen;
Extrahieren (S402) von Klangkategorien der Vielzahl von Audioframes und einer Semantik; und
Erlangen (S403) eines Sprachendpunkts der Audiodaten basierend auf den Klangkategorien der Vielzahl von Audioframes und der Semantik,
wobei die Vielzahl von Audioframes einen ersten Audioframe und einen zweiten Audioframe umfasst, der erste Audioframe ein Audioframe ist, der die Semantik trägt, und der zweite Audioframe ein Audioframe ist, der in der Vielzahl von Audioframes auf den ersten Audioframe folgt; und
das Erlangen eines Sprachendpunkts der Audiodaten basierend auf den Klangkategorien der Vielzahl von Audioframes und der Semantik Folgendes umfasst:
Erlangen des Sprachendpunkts basierend auf der Semantik und einer Klangkategorie des zweiten Audioframes durch Integrieren der Semantik und der Klangkategorie des zweiten Audioframes, um ein integriertes Merkmal zu erlangen, und durch Erlangen des Sprachendpunkts basierend auf dem integrierten Merkmal.

2. Verfahren nach Anspruch 1, wobei das Verfahren ferner Folgendes umfasst:
nach dem Erlangen des Sprachendpunkts, Reagieren auf eine Anweisung, die Audiodaten entspricht, die vor dem Sprachendpunkt in den Audiodaten liegen.

3. Verfahren nach Anspruch 1 oder 2, wobei das Extrahieren von Klangkategorien der Vielzahl von Audioframes und der Semantik Folgendes umfasst:
Erlangen der Klangkategorien der Vielzahl von Audioframes basierend auf Beziehungen zwischen der Energie der Vielzahl von Audioframes und voreingestellten Energieschwellenwerten.

4. Verfahren nach einem der Ansprüche 1 bis 3, wobei die Klangkategorien "Sprache", "neutral" und "Stille" umfassen, die voreingestellten Energieschwellenwerte einen ersten Energieschwellenwert und einen zweiten Energieschwellenwert umfassen und der erste Energieschwellenwert größer als der zweite Energieschwellenwert ist; und
eine Klangkategorie eines Audioframes, dessen Energie größer als oder gleich dem ersten Energieschwellenwert in der Vielzahl von Audioframes ist, "Sprache" ist;
eine Klangkategorie eines Audioframes, dessen Energie kleiner als der erste Energieschwellenwert und größer als der zweite Energieschwellenwert in der Vielzahl der Audioframes ist, "neutral" ist; oder
eine Klangkategorie eines Audioframes, dessen Energie kleiner als oder gleich dem zweiten Energieschwellenwert in der Vielzahl der Audioframes ist, "Stille" ist.

5. Verfahren nach Anspruch 4, wobei der erste Energieschwellenwert und der zweite Energieschwellenwert basierend auf der Energie von Hintergrundgeräusch der Audiodaten bestimmt werden.

6. Verfahren nach einem der Ansprüche 1 bis 5, wobei die Sprachendpunktkategorien "Sprechen", "Denken" und "Beenden" umfassen und das Erlangen des Sprachendpunkts basierend auf der Semantik und einer Klangkategorie des zweiten Audioframes Folgendes umfasst:
Bestimmen einer Sprachendpunktkategorie der Audiodaten basierend auf der Semantik und der Klangkategorie des zweiten Audioframes und Erlangen des Sprachendpunkts, wenn die Sprachendpunktkategorie der Audiodaten "Beenden" ist.

7. Spracherkennungsvorrichtung (100), umfassend:
eine Erlangungseinheit (110), die dazu konfiguriert ist, Audiodaten zu erlangen, wobei die Audiodaten eine Vielzahl von Audioframes umfassen; und
eine Verarbeitungseinheit (120), die dazu konfiguriert ist, Klangkategorien der Vielzahl von Audioframes und die Semantik zu extrahieren, wobei
die Verarbeitungseinheit ferner dazu konfiguriert ist, basierend auf den Klangkategorien der Vielzahl von Audioframes und der Semantik einen Sprachendpunkt der Audiodaten zu erlangen,
wobei die Vielzahl von Audioframes einen ersten Audioframe und einen zweiten Audioframe umfasst, der erste Audioframe ein Audioframe ist, der die Semantik trägt, und der zweite Audioframe ein Audioframe ist, der in der Vielzahl von Audioframes auf den ersten Audioframe folgt; und die Verarbeitungseinheit spezifisch zu Folgendem konfiguriert ist: Erlangen des Sprachendpunkts basierend auf der Semantik und einer Klangkategorie des zweiten Audioframes durch Integrieren der Semantik und der Klangkategorie des zweiten Audioframes, um ein integriertes Merkmal zu erlangen, und durch Erlangen des Sprachendpunkts basierend auf dem integrierten Merkmal.

8. Vorrichtung nach Anspruch 7, wobei die Verarbeitungseinheit ferner zu Folgendem konfiguriert ist:
nach dem Erlangen des Sprachendpunkts, Reagieren auf eine Anweisung, die Audiodaten entspricht, die vor dem Sprachendpunkt in den Audiodaten liegen.

9. Vorrichtung nach Anspruch 7 oder 8, wobei die Verarbeitungseinheit spezifisch dazu konfiguriert ist, basierend auf Beziehungen zwischen der Energie der Vielzahl von Audioframes und voreingestellten Energieschwellenwerten die Klangkategorien der Vielzahl von Audioframes zu erlangen.

10. Vorrichtung nach einem der Ansprüche 7 bis 9, wobei die Klangkategorien "Sprache", "neutral" und "Stille" umfassen, die voreingestellten Energieschwellenwerte einen ersten Energieschwellenwert und einen zweiten Energieschwellenwert umfassen und der erste Energieschwellenwert größer als der zweite Energieschwellenwert ist; und eine Klangkategorie eines Audioframes, dessen Energie größer als oder gleich dem ersten Energieschwellenwert in der Vielzahl von Audioframes ist, "Sprache" ist;
eine Klangkategorie eines Audioframes, dessen Energie kleiner als der erste Energieschwellenwert und größer als der zweite Energieschwellenwert in der Vielzahl der Audioframes ist, "neutral" ist; oder
eine Klangkategorie eines Audioframes, dessen Energie kleiner als oder gleich dem zweiten Energieschwellenwert in der Vielzahl der Audioframes ist, "Stille" ist.

11. Vorrichtung nach Anspruch 10, wobei der erste Energieschwellenwert und der zweite Energieschwellenwert basierend auf der Energie von Hintergrundgeräusch der Audiodaten bestimmt werden.

12. Vorrichtung nach einem der Ansprüche 7 bis 11, wobei die Sprachendpunktkategorien "Sprechen", "Denken" und "Beenden" umfassen und die Verarbeitungseinheit spezifisch zu Folgendem konfiguriert ist:
Bestimmen einer Sprachendpunktkategorie der Audiodaten basierend auf der Semantik und der Klangkategorie des zweiten Audioframes und Erlangen des Sprachendpunkts, wenn die Sprachendpunktkategorie der Audiodaten "Beenden" ist.

13. Computerlesbares Speichermedium, wobei das computerlesbare Speichermedium Programmcode speichert, der zur Ausführung durch ein Gerät verwendet wird, und der Programmcode Anweisungen umfasst, die verwendet werden, um das Verfahren nach einem der Ansprüche 1 bis 6 durchzuführen.

## Revendications

1. Procédé de reconnaissance vocale, comprenant :
l'obtention (S401) de données audio, dans lequel les données audio comprennent une pluralité de trames audio ;
l'extraction (S402) de catégories sonores de la pluralité de trames audio et de sémantiques ; et
l'obtention (S403) d'un point de fin de parole des données audio sur la base des catégories sonores de la pluralité de trames audio et des sémantiques,
dans lequel la pluralité de trames audio comprend une première trame audio et une seconde trame audio, la première trame audio est une trame audio portant les sémantiques, et la seconde trame audio est une trame audio postérieure à la première trame audio dans la pluralité de trames audio ; et
l'obtention d'un point de fin de parole des données audio sur la base des catégories sonores de la pluralité de trames audio et des sémantiques comprend :
l'obtention du point de fin de parole sur la base des sémantiques et d'une catégorie sonore de la seconde trame audio en intégrant les sémantiques et la catégorie sonore de la seconde trame audio pour obtenir une caractéristique intégrée et en obtenant le point de fin de parole sur la base de la caractéristique intégrée.

2. Procédé selon la revendication 1, dans lequel le procédé comprend également :
après l'obtention du point de fin de parole, la réponse à une instruction correspondant aux données audio qui sont antérieures au point de fin de parole dans les données audio.

3. Procédé selon la revendication 1 ou 2, dans lequel l'extraction de catégories sonores de la pluralité de trames audio et des sémantiques comprend :
l'obtention des catégories sonores de la pluralité de trames audio sur la base de relations entre une énergie de la pluralité de trames audio et des seuils d'énergie prédéfinis.

4. Procédé selon l'une quelconque des revendications 1 à 3, dans lequel les catégories sonores comprennent « parole », « neutre », et « silence », les seuils d'énergie prédéfinis comprennent un premier seuil d'énergie et un second seuil d'énergie, et le premier seuil d'énergie est supérieur au second seuil d'énergie ; et
une catégorie sonore d'une trame audio dont l'énergie est supérieure ou égale au premier seuil d'énergie dans la pluralité de trames audio est « parole » ;
une catégorie sonore d'une trame audio dont l'énergie est inférieure au premier seuil d'énergie et supérieure au second seuil d'énergie dans la pluralité de trames audio est « neutre » ; ou
une catégorie sonore d'une trame audio dont l'énergie est inférieure ou égale au second seuil d'énergie dans la pluralité de trames audio est « silence ».

5. Procédé selon la revendication 4, dans lequel le premier seuil d'énergie et le second seuil d'énergie sont déterminés sur la base de l'énergie du son d'arrière-plan des données audio.

6. Procédé selon l'une quelconque des revendications 1 à 5, dans lequel les catégories de points de fin de parole comprennent « parler », « penser », et « terminer », et l'obtention du point de fin de parole sur la base des sémantiques et d'une catégorie sonore de la seconde trame audio comprend :
la détermination d'une catégorie de point de fin de parole des données audio sur la base des sémantiques et de la catégorie sonore de la seconde trame audio, et l'obtention du point de fin de parole lorsque la catégorie de point de fin de parole des données audio est « terminer ».

7. Appareil de reconnaissance vocale (100), comprenant :
une unité d'obtention (110), configurée pour obtenir des données audio, dans lequel les données audio comprennent une pluralité de trames audio ; et
une unité de traitement (120), configurée pour extraire des catégories sonores de la pluralité de trames audio et des sémantiques, dans lequel
l'unité de traitement est également configurée pour obtenir un point de fin de parole des données audio sur la base des catégories sonores de la pluralité de trames audio et des sémantiques,
dans lequel la pluralité de trames audio comprend une première trame audio et une seconde trame audio, la première trame audio est une trame audio portant les sémantiques, et la seconde trame audio est une trame audio postérieure à la première trame audio dans la pluralité de trames audio ; et l'unité de traitement est spécifiquement configurée pour :
obtenir le point de fin de parole sur la base des sémantiques et d'une catégorie sonore de la seconde trame audio en intégrant les sémantiques et la catégorie sonore de la seconde trame audio pour obtenir une caractéristique intégrée et en obtenant le point de fin de parole sur la base de la caractéristique intégrée.

8. Appareil selon la revendication 7, dans lequel l'unité de traitement est également configurée pour :
après l'obtention du point de fin de parole, répondre à une instruction correspondant à des données audio qui sont antérieures au point de fin de parole dans les données audio.

9. Appareil selon la revendication 7 ou 8, dans lequel l'unité de traitement est spécifiquement configurée pour obtenir les catégories sonores de la pluralité de trames audio sur la base de relations entre l'énergie de la pluralité de trames audio et des seuils d'énergie prédéfinis.

10. Appareil selon l'une quelconque des revendications 7 à 9, dans lequel les catégories sonores comprennent « parole », « neutre », et « silence », les seuils d'énergie prédéfinis comprennent un premier seuil d'énergie et un second seuil d'énergie, et le premier seuil d'énergie est supérieur au second seuil d'énergie ; et une catégorie sonore d'une trame audio dont l'énergie est supérieure ou égale au premier seuil d'énergie dans la pluralité de trames audio est « parole » ;
une catégorie sonore d'une trame audio dont l'énergie est inférieure au premier seuil d'énergie et supérieure au second seuil d'énergie dans la pluralité de trames audio est « neutre » ; ou
une catégorie sonore d'une trame audio dont l'énergie est inférieure ou égale au second seuil d'énergie dans la pluralité de trames audio est « silence ».

11. Appareil selon la revendication 10, dans lequel le premier seuil d'énergie et le second seuil d'énergie sont déterminés sur la base de l'énergie du son d'arrière-plan des données audio.

12. Appareil selon l'une quelconque des revendications 7 à 11, dans lequel les catégories de points de fin de parole comprennent « parler », « penser », et « terminer », et l'unité de traitement est spécifiquement configurée pour :
déterminer une catégorie de point de fin de parole des données audio sur la base des sémantiques et de la catégorie sonore de la seconde trame audio, et obtenir le point de fin de parole lorsque la catégorie de point de fin de parole des données audio est « terminer ».

13. Support de stockage lisible par ordinateur, dans lequel le support lisible par ordinateur stocke un code de programme utilisé pour l'exécution par un dispositif, et le code de programme comprend des instructions utilisées pour réaliser le procédé selon l'une quelconque des revendications 1 à 6.
